# EUROPEAN PATENT APPLICATION

(11) **EP 1 107 126 A2**
(43) Date of publication of application: **13.06.2001**
(21) Application number: 00115468.1
(22) Date of filing: 18.07.2000
(51) Int. Cl.: G06F 17/30

(54) **A fast, efficient, adaptive, hybrid tree**

(30) Priority: 08.12.1999 US 457164
(71) Applicant: Hewlett-Packard Company, A Delaware Corporation, Palo Alto, CA 94304 (US)
(72) Inventor: Baskins, Douglas L., CO 80524 (US)
(74) Representative: Schoppe, Fritz, Dipl.-Ing.

(57) **Abstract**

A novel data structure (1010) for a data processing system is presented. A novel combination of positional and immediatized indexes results in both optimized data access times and memory efficiency. The optimization is achieved via two unique mechanisms. The first mechanism, collapsing, optimizes the hybrid tree data structure (1010) by eliminating unnecessary levels of the tree. The second mechanism, namely the use of immediate indexing, optimizes the hybrid tree data structure (1010) by essentially pruning the branches of the tree to store each index at the highest level of the tree possible. Both optimization techniques result in increased data access times and reduction of memory overhead. Searching for mapped indexes is faster because unmapped indexes are skipped at as high a level as possible in the tree. When an expanse represented by a pointer is not heavily populated with stored values, it is compacted into a higher level of the tree by using immediate indexes, which include a portion of the index information that would otherwise be purely positional.

## Description

### Field of the Invention

The present invention relates generally to the field of data structures, and more particularly to a fast, efficient, adaptive, hybrid tree.

### Background of the Invention

Computer processors and associated memory components continue to increase in speed. As hardware approaches physical speed limitations, however, other methods for generating appreciable decreases in data access times are required. One method is via effective data management, achieved by the appropriate choice of data structure and related storage and retrieval algorithms. Various prior art data structures and related storage and retrieval algorithms developed for data management include arrays, hashing, binary trees, AVL trees (height-balanced binary trees), b-trees, and skiplists. However, an inherent trade-off exists between providing faster access times and providing lower memory overhead.

Arrays allow fast indexing (i.e., the calculation of the address of a single array element), but require preallocation of the entire array before storing even a single value. This is very inefficient for large, sparse arrays. Hashing is fast, but leads to synonym management complexities and limitations, has no near-neighbor lookup capability, and the hash table must be carefully tuned to the size and nature of the data being stored. Binary trees get too deep with large data sets, resulting in many memory accesses to reach target values. AVL trees (height-balanced binary trees) are expensive to keep balanced and, because they can also become rather deep, may require a large number of memory accesses to index certain elements. B-trees are slow to access and inherently difficult to balance. Skiplists simplify the tree balancing problem by using a probabilistic method instead of a strictly enforced balancing method. Their modest improvement in performance is primarily due to the quaternary, rather than binary, nature of the data structure. Binary trees, AVL trees, b-trees, and skiplists share an O(log n) lookup time behavior, meaning that the bigger the data set, the longer it takes to look up an element.

Another prior art data structure is known as a Trie data structure. This name was suggested by E. Fredkin [CACM 3 (1960), 490-500] because it is a part of information reTRIEval. Tries are fast but memory-inefficient and hence seldom used. In a Trie, a target value is stored according to its positional location in the Trie. A detailed description of the Trie data structure and search algorithm may be found in Knuth, Donald, *The Art of Computer Programming, Vol. III - Sorting and Searching,* p. 492, ISBN 0-201-89685-0. Trie memories typically require a large amount of storage space, even when only storing a small amount of data. Trie data structures also generally require access times proportional to the number of significant digits of the index value. Thus, the access time for storing an index that has a large number of significant digits can be lengthy.

Accordingly, a need exists for an alternative data structure which provides fast access times and which adjusts in size to the amount of stored data.

### Summary of the Invention

The present invention is a novel data structure and related data storage and retrieval algorithm that allows minimal memory accesses, employs low memory overhead, and adapts in breadth and depth to unpredictable sets of data indexes. Unlike the prior art, the depth of the tree (i.e., the number of memory accesses to reach a target value) does not increase significantly with the population of the tree.

The storage and retrieval algorithms used with the data structure of the invention map from any I-bit index value to an arbitrary corresponding T-bit target value. In the preferred embodiment, the I-bit index value and T-bit target values are parameterized and compiled into the code as either a 32-bit or 64-bit value. The data structure, or "tree" as defined herein, and related algorithms for storing and retrieving data to and from the tree employ adaptive N-ary branches and immediatized data to naturally balance the tree according to the data set stored in it. Accordingly, the invention allows very fast lookup times for large sparse arrays, compared to prior art data structures, and stores data sets, including both fully populated data sets or sparsely populated sets with clustered data, using minimal memory space. The data structure grows dynamically on demand with fast insertion, and requires no tree rebalancing. Target values are stored in insertion-sorted order by their index value. The location of each neighbor of a given index value (i.e., adjacent valid index values, descending or ascending) and recognition of contiguous valid indexes is easily determined.

The data structure and related insertion and retrieval algorithms of the invention employ a combination of positional and local (i.e., immediatized) indexes in a manner that results in minimum wasted memory and the fastest possible lookups. The external interface is similar to that of a sorted array, but the internal data structure is an elegant hybrid between arrays and tries. The data structure adapts to unpredictable data (i.e., indexes presented to it in realtime for storage) that results in easier addressing, minimum number of memory accesses, and minimum wasted space used for undefined elements. Clustered or periodic indexes are grouped and automatically grow as appropriate.

### Brief Descriptions of the Drawings

The invention will be better understood from a reading of the following detailed description taken in conjunction with the drawing in which like reference designators are used to designate like elements, and in which:
FIG. 1(a) is a model diagram of a tree in accordance with the data structure of the invention;
FIG. 1(b) is an illustrative embodiment of a branch implemented in accordance with the invention;
FIG. 2 illustrates a representative example of the contents of the branch of FIG. 1(b);
FIG. 3(a) is a diagram of a first embodiment of the invention which illustrates the maximum allowed tree depth for a system based on a 32-bit addressing scheme and which employs quaternary indexing;
FIG. 3(b) is a diagram of a an alternative embodiment of the invention which illustrates the minimum tree depth for a system based on a 32-bit addressing scheme and which employs quaternary indexing;
FIG. 4 is a diagram of a tree implemented in accordance with the invention which illustrates the use of immediate indexing;
FIG. 5(a) is an embodiment of a tree implemented in accordance with the invention which illustrates collision resolution when an existing immediate index is an "in-position" sibling of the new index;
FIG. 5(b) is an embodiment of a tree implemented in accordance with the invention which illustrates collision resolution when an existing immediate index is an "out-of-position" sibling of the new index;
FIG. 5(c) is an embodiment of a tree implemented in accordance with the invention which illustrates cascading as a result of collision resolution;
FIG. 6(a) is a portion of a tree implemented in accordance with the invention which illustrates the collapsing of a level of the tree;
FIG. 6(b) is a portion of the tree of FIG. 6(a) which illustrates a cascade;
FIG. 7 is a flowchart of a method in accordance with the invention for inserting an index into a tree of the invention;
FIG. 8 is a flowchart illustrating one embodiment of a method for collision resolution;
FIG. 9 is a flowchart of a method in accordance with the invention for looking up a value mapped to an index in a tree of the invention; and
FIG. 10 is a block diagram of data processing system which uses the data structure of the invention.

### Detailed Description of the Present Invention

For ease of understanding the invention, a description of the terminology shown in bold is included below. The data structure of the invention is hereinafter termed "tree" due to its structural characteristics analogous to its organic counterpart; however, the meaning of the term "tree" is understood to be defined only according to the terms in bold below, and is not to be confused or limited by the prior art data structure of the same name.

It is assumed for purposes of illustration only and not by way of limitation that all memory objects are 16-byte aligned (i.e., the first location in the object is at a memory location whose address is an integer multiple of 16) and that the computer processing unit (CPU) employs a 32-bit addressing scheme.

### GLOSSARY

In accordance with the invention, T-bit t**arget values** are mapped to corresponding I-bit **index values** and stored in a **tree**. The **tree** structure comprises a set of **nodes** arranged in a plurality of **levels**. A tree can have up to 1/2 + 1 levels. **A digit** is two or more bits of an index. The size of a digit is D bits, where 2^{D} is the number of slots in each narrow branch. In the preferred embodiment, quaternary indexing is used, so D=2.

**A root pointer** is the top (trunk) of the tree, similar to a pointer to the first element (index 0) of an array. A root pointer is always at the top level of the tree (level 16 if index values have I=32 bits, level 32 if index values have I=64 bits). This is inverse of the typical definition of a tree (node) level, where the root is at level 1 and the level increases with depth. It is possible to invert the sense of "level" for trees in accordance with the invention because they have a fixed maximum depth.

Non-leaf nodes in the tree are called **branches.** Each leaf node in a tree is called a **leaf**. Each position in a leaf or a branch is called a slot. A **narrow branch** is a branch comprising 2^{D} slots. A **wide branch** is a branch with (2^{D})ⁿ slots, where n = 2, 3, 4, etc. The illustrative embodiment employs a **quaternary** system (i.e., D = 2); accordingly, a narrow branch comprises 4 slots and a wide branch comprises 4ⁿ slots, where n = 2, 3, 4, etc.

A **leaf** is always pointed to by special type of pointer called a **leaf pointer**. A leaf pointer indicates which slots in the associated leaf are valid. Leaf pointers are the only types of pointers in level 1 branches in the tree, and they occur only at level 1.

By definition, a leaf always resides at level 0 in the tree. Leaves always contain the minimum size number of slots (i.e., D slots), each of which contains a **target value** or is invalid. In the preferred embodiment, a leaf always contains four (4ⁿ, where n=1) slots.

A slot in a branch can hold a **null pointer**, a **branch pointer**, a **leaf pointer**, or an **immediate index**. A **null pointer** indicates that the slot is unoccupied - that is, an index that would otherwise positionally occupy the slot does not exist in the tree. A **branch pointer** is a pointer to another branch. A **leaf pointer** is a pointer to a leaf. An **immediate index** stores a target value in a value area, termed a **flower**, associated with the slot.

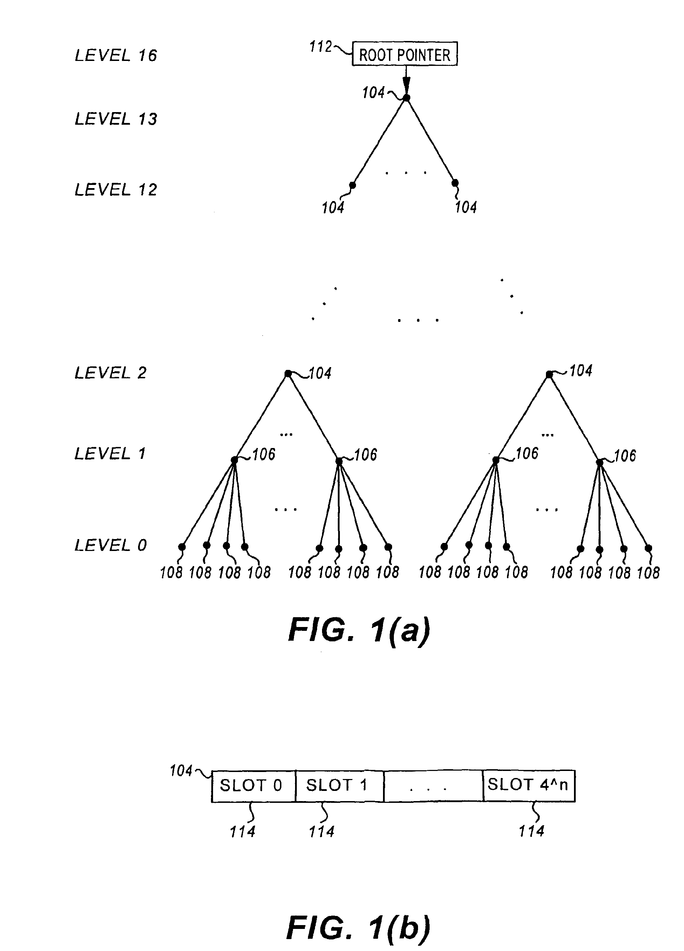

FIG. 1(a) is a model of a tree 100 in accordance with the data structure of the invention. Root pointer 112 at level 16 points to branch 104. Branch 104, as illustrated in FIG. 1(b), comprises 4^{m} slots 114 (where n = 2, 3, 4, ...). In the illustrative embodiment of FIG. 1(a), n=1 and branch 104 comprises 2^{D} = 2² = 4 slots. Each slot 114 contains either a null pointer, a branch pointer, a leaf pointer, or an immediate index.

Below is a representation of one embodiment of the contents of a slot 114 containing a null pointer.

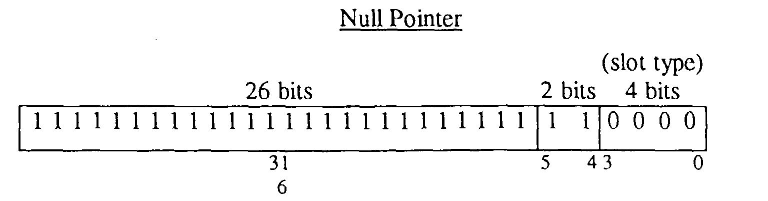

In this embodiment, the least four bits <0-3> of slot 114, called a "slot type", are set to "0", and each of the upper 28 bits <4-31> is set to "1". As appreciated by those skilled in the art, the format and contents used to represent a null pointer may vary from implementation to implementation. A null pointer indicates that the index defined by the null pointer's position in the tree is not mapped - i.e., no target value exists which is mapped to that particular index value.

Below is a representation of one embodiment of the contents of a slot 114 containing an immediate index.

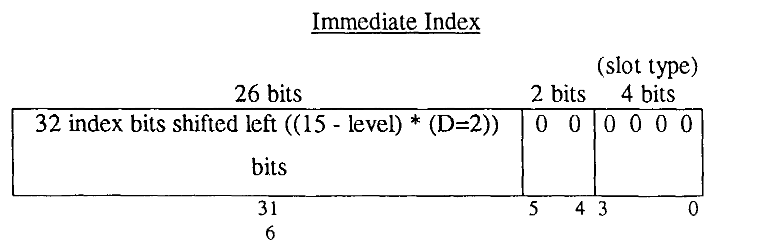

In this embodiment, the least six bits of the slot 114, i.e., the slot type bits <0-3> plus the next two bits <4-5>, are set to "0". The remaining upper bits <6-31> contain the lower portion of the index that is mapped to the slot's immediatized target value, whose resolution is finer than the index defined by the slot's position in the tree. In other words, in a 32-bit address machine, where I = T = 32 and D = 2, the upper bits of an immediate index equals 32 index bits shifted left ((15 - current level) * (D=2)) bits. The "missing" upper bits of an immediate index (i.e., those that are shifted out of the value stored in the slot 114) are positional. That is, they are implicit in the position in the tree of the immediate index. The parent branches 104 leading to the immediate index each provide one or more of the "missing" digits of the index. In the embodiment described herein, indexes are shifted left by digits (D bits per digit) while descending the tree, so the leftmost digits are indicative of the position of the index in the current branch. For a narrow branch, this is just the single leftmost digit (comprising D bits). The most significant digit of an immediate index is equal to its correct slot. Hence, it is safe to simply compare the new index, already shifted left according to the branch's level, to all immediate indexes found in the branch.

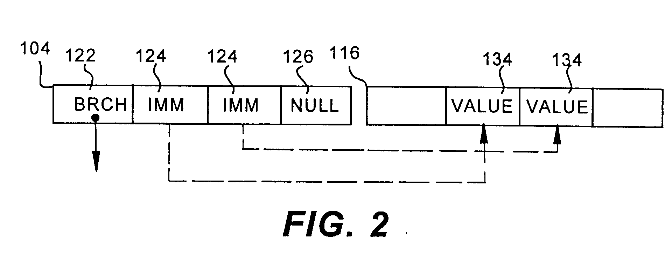

A branch 104 containing an immediate index always has a target value area, or flower 116, associated with it that contains an immediatized target value. Accordingly, if a branch contains an immediate index in one or more of its slots 114, the branch has an associated flower 116 comprising target values corresponding to the immediate indexes in the branch. FIG. 2 illustrates a representative example of a branch 104 containing one branch pointer 122 (described in detail hereinafter), two immediate indexes 124, and a null pointer 126, along with the associated flower 116.

As previously defined, flowers 116 only appear with narrow branches. It is the presence of one or more immediate indexes that determines whether a narrow branch 104 has a flower 116. In the illustrative embodiment, a flower 116 is allocated at the time the first immediate index is inserted in an associated narrow branch 104. Once a branch 104 contains no immediate indexes, its associated flower 116 is deallocated and the flower memory made available for reuse. As discussed hereinafter, wider branches never contain immediate indexes or have associated flowers; nor do leaves.

Below is a representation of one embodiment of the contents of a slot 114 containing a branch pointer.

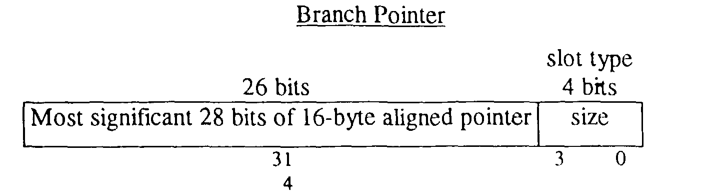

A branch pointer is indicated when the contents of the least significant four bits (labeled "slot type") of a slot 114 are non-zero and the slot 114 does not reside at level 1. When a slot 114 contains a branch pointer, the slot type is used to indicate the size of the branch pointed to by the branch pointer. The most significant 28 bits comprises the address of (i.e., pointer to) a branch having 4ⁿ slots. Accordingly, if n = 1, the branch pointed to by the branch pointer comprises four (4¹) slots; if n = 2, the branch pointed to by the branch pointer comprises sixteen (4²) slots; if n = 3, the branch pointed to by the branch pointer comprises sixty-four (4³) slots; and so forth. Thus, in a 32-bit address machine, a branch pointer points to a branch that ranges from four slots long (2^{D} = 2² = 4) up to 4¹⁵ ((2^{D})¹⁵ = (2²)¹⁵ = approximately 1 billion) slots long. The size specified in the least significant four bits of the branch pointer indicates the number of digits (of D bits each) of the index to decode (left justified) to access the next slot in the next branch - that is, how many levels are descended in the tree by the branch pointer, and also how many slots 114 exist in the branch pointed to by the branch pointer.

Below is a representation of one embodiment of the contents of a slot 114 containing a leaf pointer .

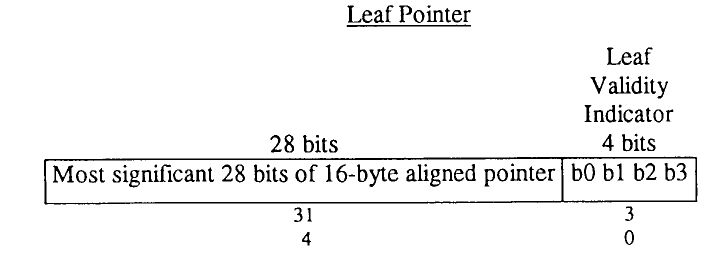

A leaf pointer only resides in slots residing on level 1. In the illustrative embodiment, the 2^{D} (i.e., four) least significant bits of the leaf pointer operate as a leaf validity indicator. Each bit b0, b1, b2, b3 of the leaf validity indicator maps to a leaf in the tree (which reside contiguously starting at the address pointed to by the pointer represented by the most significant twenty-eight bits of the leaf pointer), and indicate whether or not the contents of its corresponding leaf are valid. In the illustrative embodiment, if a bit b0, b1, b2, or b3 in leaf validity indicator is set, it indicates that it's corresponding mapped leaf contains an existing valid target value. If, on the other hand, a bit b0-b3 of leaf validity indicator is not set, the leaf mapped to that particular bit does not contain an existing valid target value.

Although not required for implementation of the invention, in the preferred embodiment leaf pointers are used to allow a null pointer to be distinguished from a target value stored at a leaf. If leaf pointers are not implemented, the target value that is used to implement the null pointer cannot be stored at a leaf. Thus, leaf pointers allow any target value, including the value used to distinguish null pointers, to be stored in a leaf. In addition, the use of leaf pointers eliminates the need to actually read the contents of the leaf to determine whether or not the target value has been mapped (i.e., whether or not the target value exists and is valid).

Although leaf pointers only exist in level 1 branches, level 1 branches do not necessarily contain only leaf pointers. Level 1 branches can also contain null pointers and immediate indexes, discussed in detail hereinafter.

**Narrow branches** are minimum size branches comprising 2^{D} slots. Accordingly, in the illustrative embodiment, where D = 2, narrow branches are quaternary (2^{D} = 2² = 4); that is, they have four slots and fork four ways. **Wide branches** are branches of any size greater than the minimum size branches. Thus, in a quaternary system, a wide branch has more than four slots (n=2, 3, ...) and exists under conditions hereinafter described. The size of a level 1 branch is not necessarily that of a narrow branch; if higher level branches have been collapsed, as described hereinafter, into the level 1 branch, it may be a wide branch.

Classical tree data structures have an **order**, which is the number of forks at each branch. The tree of the invention is distinguished in that it has a **variable order** of (2^{D} )ⁿ (or 4ⁿ in the illustrative embodiment) as branches adapt to the data being stored.

An **expanse** is a (2^{D} )ⁿ-aligned range of indexes; for example, 4..7 or 16..31. Anywhere a pointer exists in a tree, that pointer represents a range of possible indexes (an expanse). The expanse of the root pointer is 2¹ indexes, representing indexes 0 through 2³². The expanse of a pointer in any slot in the tree is 2^{(level∗D)} indexes. For example, a leaf pointer in a level 1 branch in a quaternary tree (D=2) has an expanse of four indexes, and in fact, points to a leaf containing up to four valid target values; a branch pointer in a level 2 branch has an expanse of 2^{2*2} = 16 indexes and in fact points to a level 1 branch containing up to four branch pointers each having an expanse of four indexes.

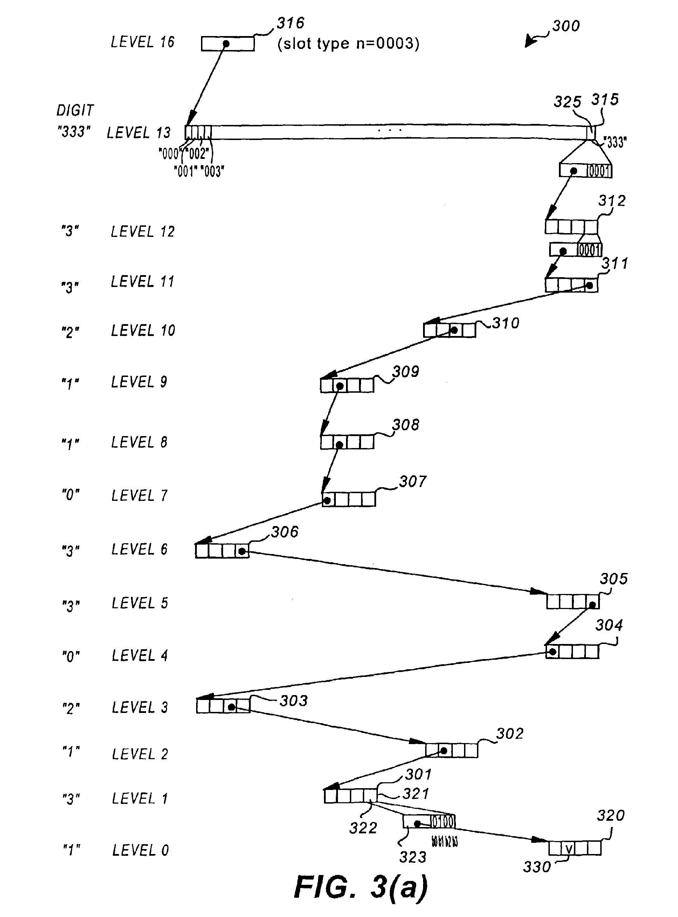

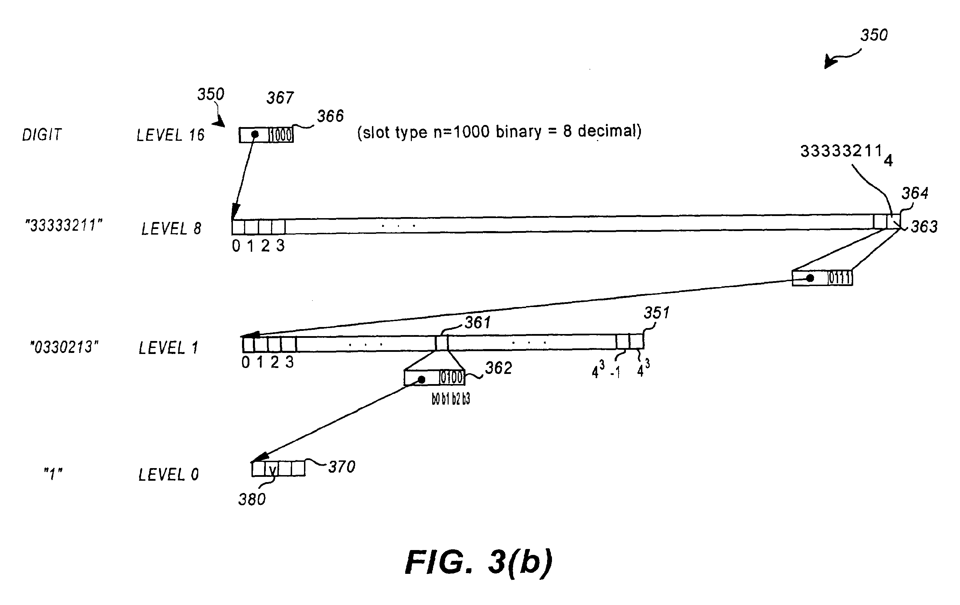

FIGS. 3(a) and 3(b) are tree diagrams, illustrating two extremes of a tree in accordance with the invention. FIG. 3(a) is a diagram of a 16-level tree 300, which illustrates the maximum required tree depth for a system based on a 32-bit addressing (I = 32) scheme and which employs quaternary (base 4) indexing (i.e., D=2). Root pointer 316 at level 16 comprises a branch pointer that points to a branch 315 of size four slots located one level immediately lower in the tree at level 15. The size value *n* contained in the slot type of root pointer 316 indicates the number of levels to subtract from the current level while descending the tree, and also the number of parsed digits of an index to use for addressing the index's correct slot in the branch. In tree 300, each branch 315, 314, ..., 301 is a narrow branch and therefore comprises four slots. Branch 301 at level 1 includes a leaf pointer 362 that points to leaf 320 and indicates the contents of the slot 322 in leaf validity indicator 321 that slot 326 of leaf 320 contains a valid target value V. Leaf 320 comprises four slots each of a size large enough to store a target value.

Tree 300 in FIG. 3(a) is shown storing a target value V mapped to a 16-bit quaternary (base 4) Index "33333211033021314" (derived from 32-bit binary (base 2) Index "1111111111111001010011110010011101₂"). The rest of tree 300 is shown as empty for convenience of illustration.

In the preferred embodiment, tree 300 is indexed using quaternary digits D to allow pointers to align with 16-byte addresses. The 16-bit quaternary digit Index is obtained from the 32-bit binary Index by partitioning the 32-bit binary Index into digits of D=2 bits each. For example, with I=32 and a hexadecimal target value 0x87c53a9b (D=4), the quaternary representation is obtained by partitioning the binary digits into pairs as illustrated in table A below.

**Table A**

| Hexadecimal (D = 4) | F | F | C | 5 | 3 | A | 9 | B |
|---|---|---|---|---|---|---|---|---|
| Binary (D = 1) | 1111 | 1111 | 1110 | 0101 | 0011 | 1100 | 1001 | 1101 |
| Quaternary (D = 2) | 33 | 33 | 32 | 11 | 03 | 30 | 21 | 31 |

For ease of illustration, the examples and embodiments presented hereinafter utilize I=32 and D=2. It will be appreciated by those skilled in the art, however, that any index size I and digit size D may be employed with various tradeoffs. Furthermore, in the 32-bit implementation described herein, the root pointer must contain either a null pointer or a branch pointer. As described previously, in the preferred implementation of a 32-bit system the least four bits of the branch pointer contents indicate the slot type. If the last four bits are "0000" it means that the slot contains either a null pointer or an immediate index. To distinguish these, the least six bits of immediate indexes are always "000000". These trailing zeroes are ensured by never storing immediate indexes in the top three levels of the tree (i.e., levels 15..13 on a 32-bit system). Hence, immediate indexes are always shifted left at least six bits, corresponding to three levels at D=2 bits per digit. The "missing" higher bits of an immediate index (i.e., those that are shifted out of the value stored in the immediate index slot) are positional. That is, they are implicit in the position in the tree of the immediate index. The parent branches leading to the immediate index each provide one or more of the "missing" digits of the index.

For branch pointers, the *size,* indicated by the least four bits of the slot, is always non-zero and specifies the width of the branch to which the pointer points (width = 4^{*size*}). In the preferred embodiment, narrow branches and leafs are both 16-bytes in size (2²=4 slots at P=32 bits = 4 bytes each) and are self-aligned in memory when allocated. Hence, the least four bits of the address of any branch or leaf are always 0000.

Note that on a 64-bit system, a narrow branch is 32 bytes in size (4 slots at 8 bytes each) rather than 16 bytes on a 32-bit system, and when self-aligned during memory allocation, the least bits of a branch pointer to a narrow branch are always "00000". The size field is five bits wide rather than four, taking advantage of the extra unused bit in a branch pointer. Hence a branch pointer can point to a branch of width up to 4³¹ slots. In this embodiment, the least 6 bits of a null pointer are defined to be "100000" rather than "110000" in the 32-bit system.

The level of a branch in the tree is used for two purposes: first, while traversing the tree, the branch level specifies the number of digits in the index not yet decoded, for storing or comparing with immediate indexes; second, the branch level distinguishes branch and leaf pointers, since the latter exist at level 1 only.

Returning now to FIG. 3(a), to search tree 300 for an index (e.g., "33333211033021314"), root pointer 316 positioned at level 16 is accessed. Since root pointer 316 is not empty but rather points to a branch of size 4ⁿ = 4³ = 64, where n=3 (obtained from the contents "0011"of the slot type of root pointer 316), branch 315 pointed to by root pointer 316 is a wide branch comprising sixty-four slots, and is positioned three levels below in the tree (i.e., level (16 - n) = level (16 - 3) = level 13). Three digits (because n=3 in root pointer 316) are parsed from the leftmost quaternary digits of index "3333321103302131₄"; thus, the parsed digit is "333". Parsed digit "333" is then used to index into branch 315 to obtain the next slot 325, which corresponds positionally to the parsed digit "333" of the index in tree 300.

Slot 325 contains a branch pointer of size 4ⁿ = 4, where n=1 (obtained from the contents "0001"of the slot type). Thus, branch 312 pointed to by branch pointer 325 is a narrow branch comprising four slots, and is positioned exactly one level below branch 315 in the tree (i.e., level (13 - n) = level (13 - 1) = level 12). Again, one digit (because n=1 in branch pointer 325) is parsed from the leftmost remaining unparsed quaternary digits of index "**3**321103302131₄"; thus, the parsed digit is "3". The parsed digit "2" is then used to index into branch 312 to obtain the next slot, which is slot 322.

Slot 322 contains a branch pointer. The above indexing process, parsing each remaining unparsed quaternary digit from the index, is repeated until slot 321 of narrow branch 301 is reached. Because slot 321 resides at level 1 and the slot type is non-zero, slot 321 by definition contains a leaf pointer 323. Accordingly, the bit in the leaf validity indicator 321 of leaf pointer 323, indexed using the value of the last remaining unparsed digit, is checked to determine if the leaf mapped to that particular bit is valid. Thus, because the last remaining unparsed digit in index "333332110330213**1**₄" is "1", the contents <b0 b1 b2 b3> of the leaf validity indicator of leaf pointer 323 are "0100", the bit <b1> in the leaf validity indicator indexed positionally by digit value "1" is set, indicating that the leaf 330 in leaf node 320 mapped to bit <b1> in leaf pointer 323 is valid. Accordingly, the target value **V** is read from slot 330 of leaf node 320.

FIG. 3(b) is a diagram of a three-level tree 350, which illustrates an alternative preferred embodiment of the invention and the opposite extreme of tree 300. Tree 350 is also based on a 32-bit binary addressing scheme, employs quaternary indexing, and also stores quaternary index "3333321103302131₄", In this embodiment, root pointer 366 points to a branch 351 at level 8 of size 4⁸ slots (since n=12 in root pointer 316). It will be noted that in the preferred implementation, the slot type of the root pointer never exceeds 8 or "1000". Accordingly, eight levels of tree 350 are descended from root pointer 316 to level 8 branch 351. Eight digits "33333211" are parsed from the left of index "3333321103302131₄". Slot 363 in branch 364 corresponds positionally to the parsed digits "33333211". Slot 363 contains a branch pointer pointing to branch 351 at level lof size 4⁷ slots (since n=7 in branch pointer 363, 4⁷ = 16384). Accordingly, seven more levels are descended in the tree from level 8 to level 1 branch 351. Seven digits are parsed from the remaining unparsed digits "03302131₄" of the index to obtain parsed digits. Slot 361 in branch 351 corresponds positionally to the parsed digits "0330213". Since slot 361 resides in a level one branch and the slot type is non-zero, it by definition contains a leaf pointer. Bit <b1>, corresponding to the last remaining unparsed digit "1" of the index, of the leaf validity indicator 362 of the leaf pointer in slot 361 is set, indicating that the value pointed to by leaf pointer 361 in leaf 380 of leaf node 370 is valid.

To search tree 350 for an index (e.g., "3333321103302131₄"), root pointer 366 positioned at level 16 of tree 350 is accessed. Since root pointer 366 points to a branch 364 of size 4ⁿ = 4⁸, (obtained from the contents n = 1000₂ = 8 decimal of the slot type 367), branch 364 is a wide branch comprising 4⁸ slots, and is positioned eight levels below in tree 350 (i.e., level (16 - n) = level (16 - 8) = level 8). Eight digits "33333211" (because n=8) are parsed from the leftmost quaternary digits of index "3333321103302131₄". The value of the parsed digit set is used to index into branch 364 to obtain the next slot 363.

The contents of the next slot 363 contain a branch pointer because the slot type is non-zero. The branch pointer 363 points to a branch 351 at level 1 of size 4⁷ = 16384 slots since n=7. The seven unparsed digits "330213" are used as the index into level 1 branch 351 to obtain the next slot 361.

Because slot 361 resides at level 1 and its slot type 362 is non-zero, slot 361 by definition contains a leaf pointer. Accordingly, bit <b1> of slot 361's leaf validity indicator 362, corresponding to the value of the last remaining unparsed digit "1" of index "3333321103302131₄" is checked to determine if the leaf mapped to that particular bit <b1> is valid. Since bit <b1> is set, leaf 380 of leaf node 370 that is pointed by the leaf pointer in slot 361 is valid. Accordingly, the target value V is read from leaf 380 of branch 370.

It will be appreciated from the description of trees 300 and 350 that each quaternary digit or set of quaternary digits parsed from a mapped index maps positionally to a level and a branch or leaf on that level. The difference is that tree 300 comprises a single wide branch at level 13, followed by a series of strictly narrow branches, whereas tree 350 comprises two wide branches.

As described in conjunction with the FIGS. 3(a) and 3(b), the size value *n* of a branch is indicated by the contents of the slot type in a branch pointer. Size *n* also indicates the number of levels to subtract from the current level while descending the tree, and also the number of parsed digits of an index to use for addressing the index's correct slot in the branch. It will be appreciated from the above description that the wider a branch is that is pointed to by a branch pointer, the further down the tree a pointer (and therefore a parsed digit value) is descending, resulting in less time required to access the target value. For example, to reach the target value mapped to index "3333321103302131₄" in tree 300 requires fourteen memory accesses (one memory access for each of levels 16 andl3 through 1) whereas it requires only three memory accesses (one memory access for each of levels 16, 8 and 1) with tree 350. Accordingly, target value "V" indexed by Index "3333321103302131₄" in tree 350 is accessed eleven memory access cycles faster than in tree 300. A tradeoff exists, however, when storing only a few elements in a tree that looks like tree 350 because the embodiment of tree 350 requires a significant amount of memory overhead to store it (i.e., one root pointer plus 4⁸ slots at level 8 plus 4⁷ slots at level 1 plus a leaf).

Accordingly, two significant features allow the tree to adapt in order to optimize the size and shape of the tree for any given set of data that it stores. The tree depth is adjustable to reduce the number of levels to provide faster access time, and the branch width at each level is adjustable to make more efficient use of memory through the use of immediate indexes and a couple of techniques respectively referred to herein as "cascading" and "collapsing".

### Immediate Indexing

The use of immediate indexes improves the memory efficiency of the tree and average data access times of elements in the tree. An immediate index is used to store a target value higher in the tree than at the leaf level. In the preferred embodiment, immediate indexes are stored in the tree wherever possible in order to reduce memory overhead when adding an element. Thus, the first target value of an expanse is stored in the narrow branch that would otherwise hold a branch pointer to that expanse. Other free slots in a narrow branch can hold other immediate indexes, called siblings, from the same expanse or from any other expanse in the branch. When descending a tree of the invention to insert the element at a particular index, an immediate index and its corresponding target value are stored whenever the first null pointer is encountered in a branch. The immediate index is stored instead of a branch pointer that would normally lead to lower levels in the tree. Thus, immediate indexes operate to compact the number of levels required to access a target value when the number of target value stored in or below a given branch of the tree is no greater than the number of slots in that branch.

Depending on the insertion and lookup algorithm implementations, immediate indexes may be located in a narrow branch "**in-position**" or "**out-of-position**". When an immediate index is in its correct slot in a narrow branch, it is said to be "in-position". The correct slot of an immediate index is the slot in the branch that maps positionally to the value of the corresponding digits of the index that map positionally to that branch. The most significant digit of an immediate index maps directly to its correct slot in a narrow branch. When an immediate index is stored in any other slot in a branch, it is said to be "out-of-position".

All four of the expanses represented by the slots in a narrow branch share the use of all four of the branch's slots for immediate indexes. In the preferred embodiment, the first immediate index in an expanse must be stored in-position. Additional immediate indexes for an expanse (i.e., its siblings) can be stored out-of-position in other unused slots in the branch, replacing null pointers until no unused slots in the branch exist. As described previously, the most significant digit of an immediate index maps directly to its correct slot in a narrow branch; the most significant digit of out-of-position immediate indexes do not map directly to their correct slot in the branch. When two or more immediate indexes in the same expanse are stored in a branch, they are called **siblings**. Exactly one of a group of siblings is in-position, and the others are out-of-position. Siblings each have the same left-most digit. Out-of-position immediate indexes allow efficient storage of indexes that are under the same parent branch pointer's expanse, but not otherwise related.

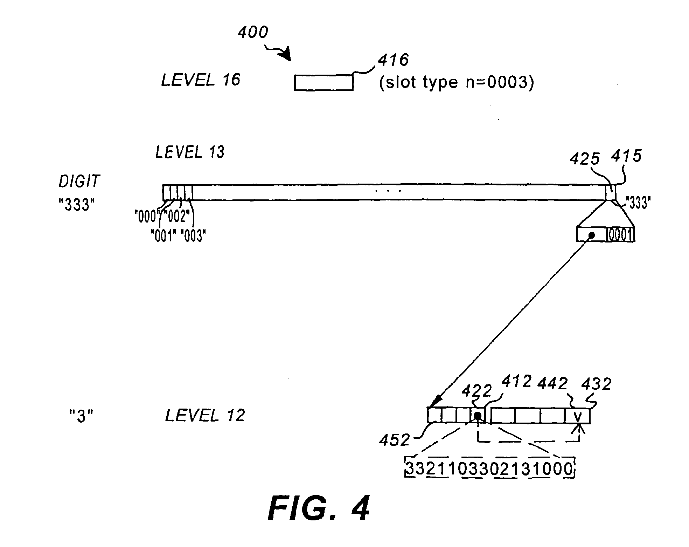

An immediate index requires storing explicitly in a branch slot the portion (digits) of the index that would otherwise be encoded "positionally" further down the tree. The "missing" digits shifted out of an immediate index are encoded in the higher levels of the tree. For example, in FIG. 4, 32-bit quaternary index "3333321103302131₄" stored four levels deep at level 12 in tree 400 as an immediate index would result in placing quaternary "3321103302131000₄" in slot 422 of branch 412 with associated value V1 stored in slot 442 of flower 432. The "missing" digits shifted out of the immediate index, namely "3", "3", and "3" are encoded in branch 415 of respective level 13.

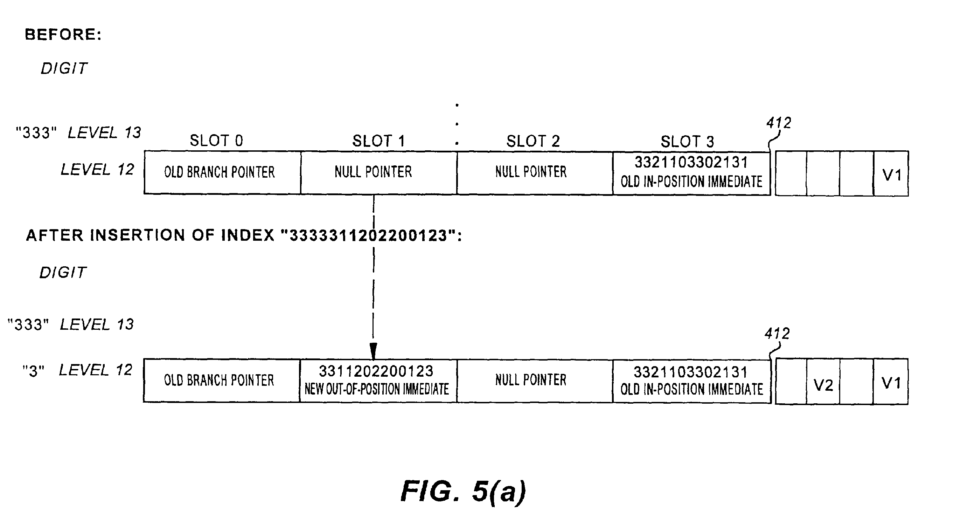

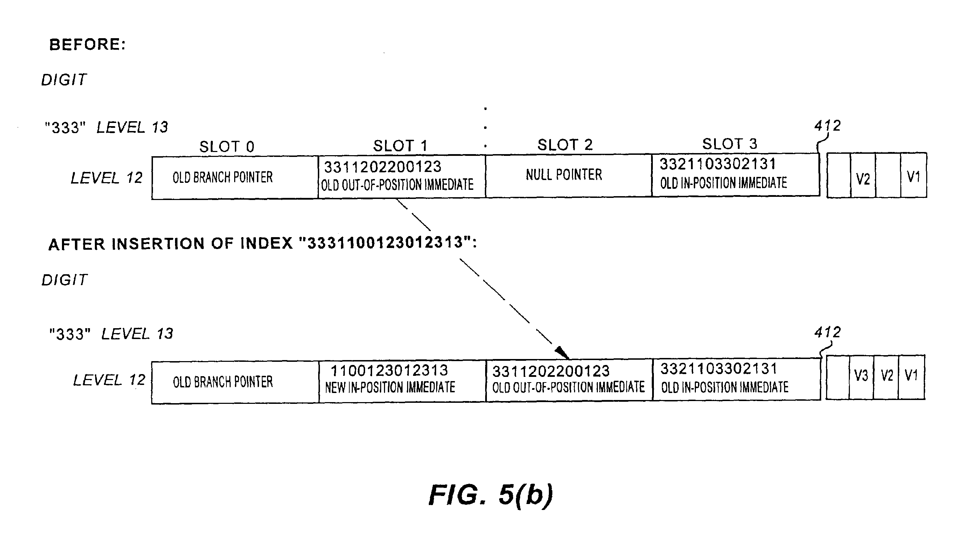

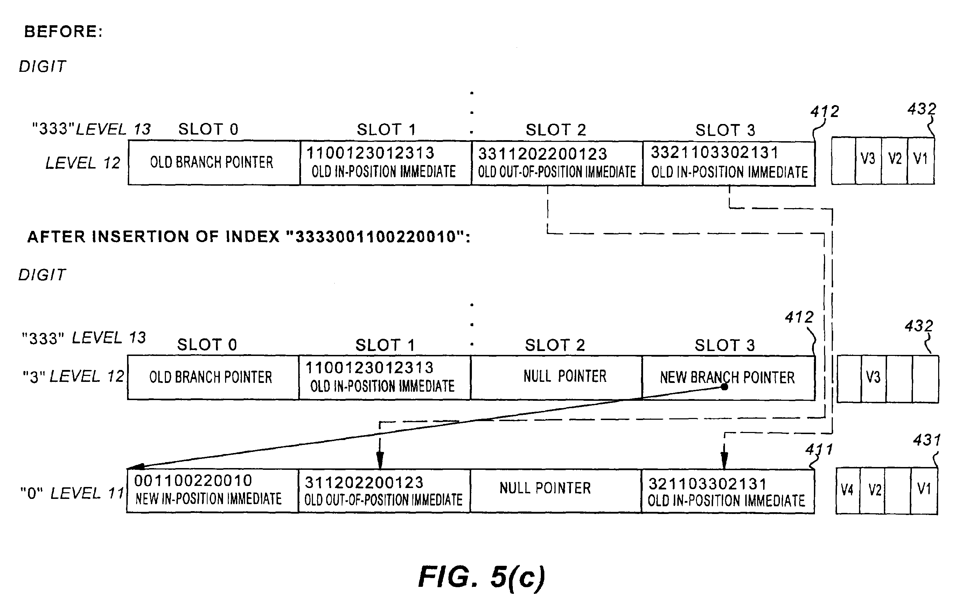

FIGS. 5(a) - 5(c) illustrate the concept of in-position versus out-of-position immediate indexes. FIG. 5(a) illustrates the insertion of index value "3333311202200123₄" into tree 400 of FIG. 4, where before insertion of the new index slot 0 contains a branch pointer, slots 2 and 3 contain a null pointer, and slot 3 contains an in-position immediate index "3321103302131000". As previously described, indexes are stored as immediate indexes as far up in the tree whenever possible. In this example, the tree is traversed through levels 16 and 13 until level 12 is reached. At level 12, the remaining unparsed digits of the index are "3311202200123". If the new index were stored in branch 412 as an immediate index, its in-position slot would be slot 3, corresponding to the left-most digit "3" of the remaining unparsed digits "3311202200123". However, its in-position slot is occupied by immediate index "3321103302131000". When two immediate indexes both belong in the same slot, a **collision** occurs. During insertion of a new index, when a collision occurs due to an immediate index, and no immediate index in the branch matches the new index, collision resolution is required. If there is a least one free slot that contains a null pointer in the branch, the new index is still saved as an immediate index in the same branch.

FIG. 5(a) illustrates a first case requiring collision resolution. In the first case, the existing immediate index is an "in-position" sibling of the new index. In this case, the new index is saved as an out-of-position sibling (also an immediate index), replacing a null pointer in any slot containing a null pointer. In the example of FIG. 5(a), slot 3 is already occupied by an in-position immediate index. Accordingly, branch 412 is checked to determine whether it contains any existing available slots, indicated by slots containing a null pointer. In this example, slot 1 is available, so the shifted index "3311202200123" is entered in slot 1 of branch 412 as an immediate index and the target value that is to be mapped to the new index is entered in the corresponding slot 1 in flower 432 associated with branch 412 (see FIG. 4).

The immediate index "3321103302131" in slot 3 of narrow branch 412 is an in-position immediate index because it occupies the slot that maps directly to the index's left-most digit "3". Immediate index "3311202200123" in slot 1 of narrow branch 412 is an out-of-position immediate index because it occupies a slot in narrow branch 412 that does not map directly to the index's left-most digit "3" - rather, it occupies slot 1 that actually maps directly to the digit "1". As previously defined, siblings in a narrow branch each share a common left-most digit. Accordingly, immediate index "3311202200123" occupying slot 1 and immediate index "3321103302131" occupying slot 3 of narrow branch 412 are siblings because they share the same left-most digit "3".

Another case requiring collision resolution exists where a collision occurs and the existing immediate index is "out-of-position". In this case, the new index is saved as an in-position immediate index in the correct slot, and the existing out-of-position immediate index is moved to a different free slot. FIG. 5(b) illustrates the second method of collision resolution. In this example, a new index "3331100123012313" is inserted into tree 400 of FIG. 4 and as updated by the data inserted as in FIG. 5(a). Accordingly, tree 400 is traversed through levels 16 and 13 until level 12 is reached. At level 12, the remaining unparsed digits of the index are "1100123012313". If the new index were stored in branch 412 as an immediate index, its in-position slot would be slot 1, corresponding to the left-most digit "1" of the remaining unparsed digits "1100123012313". Here, an out-of-position immediate index occupies slot 1. Accordingly, branch 412 is checked to determine whether it contains any existing available slots, indicated by slots containing a null pointer. In this example, slot 2 is available, so the out-of-position immediate index "3311202200123000" is moved to slot 2 of branch 412 and its corresponding target value V2 is moved to corresponding slot 2 in flower 432. Then, the remaining unparsed digits (i.e., the shifted index "1100123012313000" (padded with zeros on the right)) are entered in slot 1 of branch 412 as an immediate index and the target value V3 that is to be mapped to the new index is entered in the corresponding slot 1 in flower 432 associated with branch 412 (see FIG. 4).

In an alternative implementation, new index "3331100123012313" could instead be been stored out-of-position in slot 2 without moving the old out-of-position index already occupying slot 1 of branch 412.

### Cascading

When a collision occurs during the insertion of an index and the narrow branch does not have any existing available slots, at least one new child branch, called a cascade, is created at the next lower level. If the current branch is at level 1, a new leaf is created instead. The correct slot in the current branch is revised to hold a branch pointer or leaf pointer to the new branch or leaf.

A cascade always replaces an in-position immediate index by a branch pointer or leaf pointer. The in-position immediate index and all of its siblings (including the index being inserted in the tree if the new index is a sibling of the in-position immediate index), are moved down the tree into a new branch located on the next level of the tree.

FIG. 5(c) illustrates the insertion of an index which results in a cascade. In this example, a new index "3333001100220010" is inserted into tree 400 of FIG. 4 and as updated by the data inserted as in FIGS. 5(a) and 5(b). Tree 400 is traversed through levels 16 and 13 until level 12 is reached. At level 12, the remaining unparsed digits of the index are "3001100220010". If the new index were stored in branch 412 as an immediate index, its in-position slot would be slot 3, corresponding to the left-most digit "3" of the remaining unparsed digits "3001100220010". Here, an in-position immediate index already occupies slot 3. Accordingly, branch 412 is checked to determine whether it contains any existing available slots, indicated by slots containing a null pointer. In this example, all slots in branch 412 are occupied. Accordingly, at least one existing in-position immediate index must be cascaded by creating a new branch at the next lower level in the tree and moving the in-position immediate index and all of its siblings from the current branch into the new branch. In this example, slots 1 and 3 contain in-position immediate index. The algorithm for determining which in-position immediate index to cascade may vary from implementation to implementation according to the design of the system. In this example, in-position immediate index in slot 3 is selected for cascading since it is the slot in which the collision occurs. Accordingly, a new branch 411 and associated flower 431 are created at the next lower level 11 and initialized with null pointers. The in-position immediate index in slot 3, and each of its siblings present in branch 412 including the new index itself (if the new index is a also a sibling of the in-position immediate index) are each shifted left one digit, padded on the right with a zero, and moved, preferably in their in-position slots, into branch 411. Accordingly, slot 3 in-position immediate index "331103302131000" is shifted left one and padded on the right with a zero to obtain its corresponding immediate index "311033021310000" for level 11, and is moved into its in-position slot 3 (corresponding to the left-most digit "3" shifted out of its level 12 immediate index) of new branch 411. Its associated value V1 is moved to slot 3 of flower 431 which corresponds to slot 3 of branch 411. A branch pointer pointing to new branch 411 then replaces the slot 3 immediate index. All siblings of the moved immediate index (i.e., those immediate indexes, including the new index itself, whose left-most digit matches that "3" of the moved immediate index), and their associated target values, are also moved into branch 411 and flower 431 respectively, preferably in their in-position slots if available. Accordingly, new index "3333001100220010" is a sibling of the moved immediate index since its level 12 digit is "3". Accordingly, its corresponding level 11 immediate index "0011002200100000" is entered into its in-position slot 0 (corresponding to the left-most digit "0" of its level 11 immediate index) and its target value V4 entered in slot 0 of flower 431. Slot 2 of branch 412 also contains a sibling of the moved immediate index. Hence, the immediate index of slot 2 of branch 412 is replaced with a null pointer and it's corresponding level 11 immediate index "3112022001230000" is entered into branch 411. In this example, the in-position slot of level 11 immediate index "3112022001230000" is slot 3, corresponding to its left-most digit "3". However, since slot 3 is already occupied by in-position immediate index "3211033021310000", level 11 immediate index "3112022001230000" must be entered out-of-position in one of branch 411's available slots - in this example, slot 1. The target value V2 is moved from flower 432 to slot 1 of flower 431.

The cascade illustrated in FIG. 5(c) is triggered by only one of several cascade-triggering conditions. It will be appreciated that a cascade will occur any time a collision occurs during the insertion of a new index into the tree and no more available slots exist in the branch in which the collision occurred. The new index will be inserted as an immediate index in the cascaded branch if it is a sibling of a cascaded in-position immediate index; otherwise it will be inserted as an immediate index in the branch in which the collision occurred. At least one in-position immediate index in the branch in which the collision occurred must be cascaded. Furthermore, cascading is recursive. In the infrequent case when five indexes (comprising the index being inserted and four siblings of the index occupying all slots in a narrow branch) are involved in a cascade, at least two new branches or leaves are added to the tree. The cascade continues until reaching a level where at least one of the five indexes is in a different expanse than (i.e., is no longer a sibling of) the others, and hence can be stored as an immediate index. In the worst case, the cascade "falls" all the way to the leaf level to provide sufficient expanse for five sequential indexes, of which two or more will end up in the leaf.

When a narrow branch loses all of its immediate indexes, its associated flower is discarded and its memory deallocated for reuse, such as a leaf.

### Collapsing

Just as the height of the tree is adjustable to accommodate random data through cascading, the height of the tree also is adjustable to the data via a technique called collapsing. Collapsing is essentially a technique for widening branches to remove redundant positional information as the tree fills up with data. When any branch other than the top branch fills with pointers, that branch's parent and the parent's other child branches are checked to determine if they are all also filled with pointers. If all of the parent's slots are filled with pointers to branches at the same level and all of these child branches are also filled with pointers, then the current branch and its neighbors are "widened" into a single new wide branch and the parent branch is "collapsed" into the new wide branch. This is accomplished by concatenating all of the parent's 4ⁿ child branches into a single new wide branch having 4ⁿ slots, deleting the parent branch, and setting the pointer in the parent's parent to point to the new wide branch with its size modified to reflect the width of the new wide branch. The memory used by the old parent and child branches is deallocated and made available for reuse.

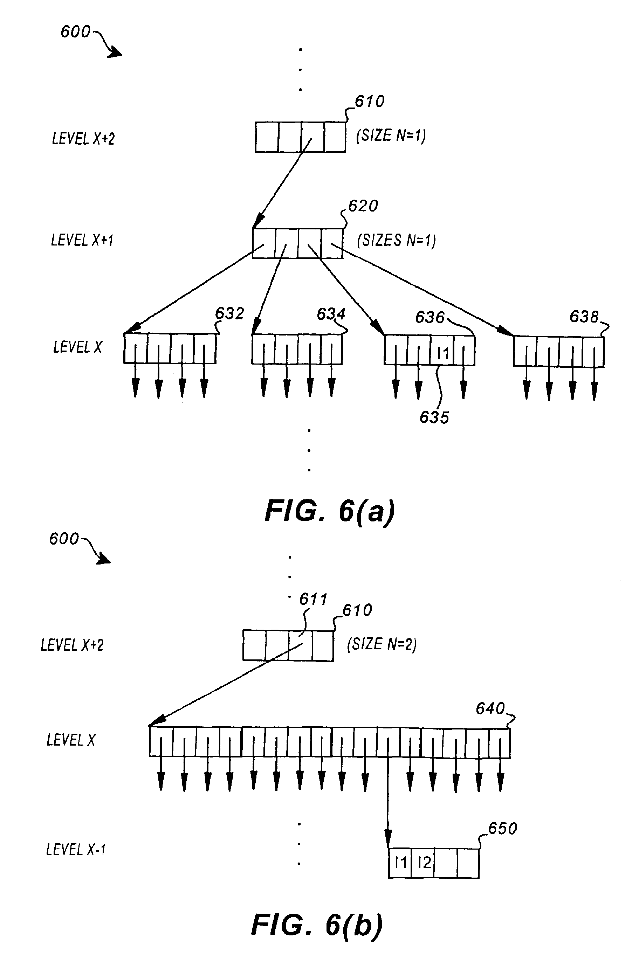

FIG. 6(a) is an illustration of the collapsing of a level of a tree. In this example, a tree 600 is populated with data such that 4-slot branch 620 at level X+1 and 4-slot branches 632, 634, 638 are all filled with branch pointers. Branch 636 is filled with branch pointers except for one immediate index I1 in slot 635. The flower associated with branch 636 exists but is not shown for ease of illustration.

FIG. 6(b) illustrates tree 600 after a new index I2 is inserted that collides with immediate index I1. Immediate index I1 and new index I2 are cascaded down the tree into a new narrow branch 650. Branch 636 then contains all branch pointers. As shown, branch X+1 and its four narrow child branches 632, 634, 636, and 638 are then replaced by a single 16-slot wide branch 640. The branch pointer in the parent branch of the parent branch of the replaced branches (i.e., branch pointer 611 of branch 610 at level X+2 is the parent of branch 620, which is the parent of all of replaced branches 632, 634, 636, and 638) is updated to point to the new wide branch 640, and its slot type is updated to reflect the size of new wide branch 640. The replacement of multiple branches with a single wide branch is called widening, and the elimination of a level of the tree due to branch widening is called collapsing. The collapsing of tree 600 to eliminate branch X+1 occurs after the existing new wide branch 640 is created.

Branch widening is recursive. After collapsing a branch, the new parent's child branches are examined to determine if another level of widening is possible, and so on. In the example in FIG. 6(b), new parent branch 610 is not filled with pointers, so no further widening occurs at the time level X+1 is collapsed.

Each time a lower-level wide branch is created with width 4ⁿ slots, memory for 4^{x} branches of width 4⁽ⁿ⁻¹⁾ slots is deallocated and made available for reuse, along with a parent branch of width 4^{x} slots. For example, suppose the top wide branch has 4³ = 64 slots, and a 4⁵ = 1024-slot wide branch with a 4-slot parent is created, freeing four 4⁴ = 256-slot branches plus an additional 4-slot branch (the parent). One of the 256-slot freed branches can be used to widen the top branch to 4⁴ or 256 slots, most of which are filled with null pointers. The root pointer is altered to point to the new top wide branch. Absorbing freed memory this way immediately reduces the tree depth while slightly improving in memory efficiency.

The same opportunistic branch widening technique can also be applied to opportunistically widen not only the top branch, but also lower branches, preferably top-down from the root pointer, to absorb freed memory. Since branches are freed in groups of 4^{x} upon widening, at most one of these freed blocks of memory can be applied to the top wide branch. Others could be immediately reused to widen other branches and reduce average tree depth with no immediate impact on memory efficiency. This feature would cause null pointers to occur in wide branches below the top branch. These null pointers could not be replaced by immediate indexes because wide branches never have flowers.

### Data Operations

The storage and retrieval of data to and from an adaptive hybrid tree implemented in accordance with the invention is facilitated by several operations, listed in TABLE 1.

**TABLE 1**

| Operation | Parameters | Return Value |
|---|---|---|
| tree_insert | root pointer, index | pointer to target value |
| tree_get | root pointer, index | pointer to target value |
| tree_delete | root pointer, index | boolean |
| tree_first | root pointer | pointer to target value of first index in tree |
| tree_last | root pointer | pointer to target value of last index in tree |
| tree_prev | root pointer, index | pointer to target value of immediately lower existing index in tree |
| tree_next | root pointer, index | pointer to target value of immediately higher existing index in tree |

Operation tree_insert, given a pointer to a root pointer and an index value, tree_insert() returns a pointer to the target value (newly-created or pre-existing) corresponding to the index, or a null pointer if out of memory. It modifies the root pointer if it creates or modifies the top branch. To insert a new index into the tree pointed to by the root pointer, tree_insert() traverses down the tree, following pointers, to find or create the appropriate location. This may involve creating a new tree if the root pointer is null, creating one or more new branches, widening one or more branches, and or creating a new leaf or a new immediate index. The root pointer is modified if the tree is created or the top branch is widened. Each new index is stored as high in the tree as possible, preferably as an immediate index unless forced down to the leaf level. This happens most often when storing sequential indexes, but this situation is also most likely to cause bottom-up branch widening that flattens the tree. When a branch is first created due to storing an index, it is always a narrow (4¹=4 slot) branch with an associated flower, and the new index is always stored as an immediate index.

Tree traversal terminates upon encountering any of a null pointer, an immediate index, or a level one branch. If the branch has a flower, or if the branch is a narrow branch to which a flower can be added, tree_insert() inserts the new index as an immediate index. Otherwise it creates a new narrow branch with a flower (one level lower) to hold the immediate index, and inserts a pointer. Either way, it returns a pointer to the associated target value, and the call to tree_insert() is then followed by storing the target value in the location pointed to by the pointer returned by tree_insert().

If a level one branch is encountered during the traversal of the tree which contains a leaf pointer in the correct slot, the valid bit in the leaf validity indicator corresponding to the new index is set and a pointer to the pre-existing target value is returned.

If an immediate index is encountered, and if it is in-position, tree_insert() checks all four slots in the branch for an immediate index matching the new index. If a match is found, the new index is already valid and need not be inserted, so tree_insert() returns a pointer to its associated target value. Otherwise, or if the immediate index is out-of-position, a collision occurs, and collision resolution is required. If there is a least one free slot that contains a null pointer in the branch, the new index is still saved as an immediate index in the same branch.

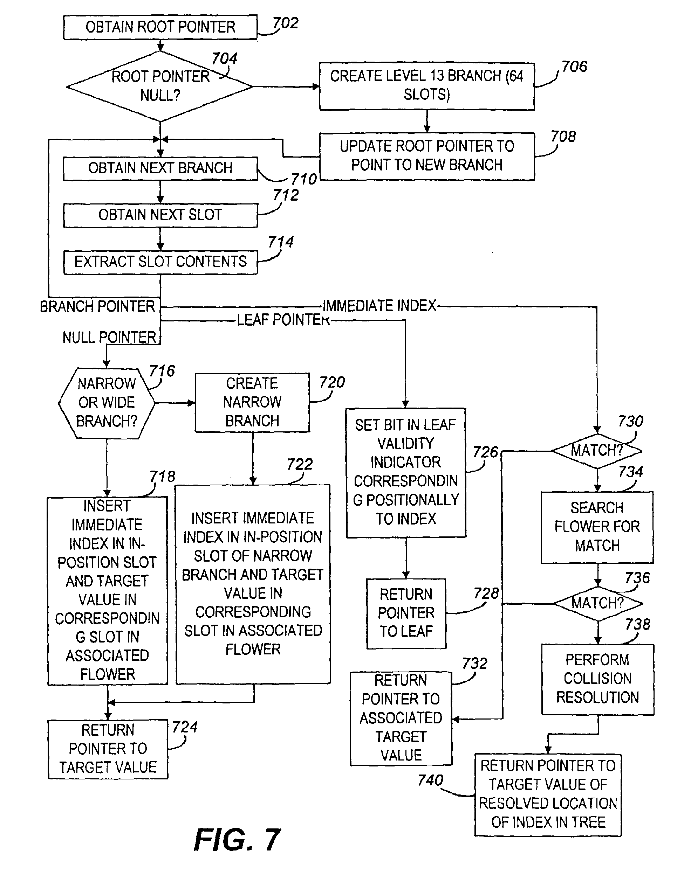

FIG. 7 is an operational flowchart of one embodiment of operation tree_insert(). The contents of the root pointer are obtained 702 and compared 704 to a null pointer. If the root pointer is null, a new branch is created 706 and the root pointer is updated 708 to contain a branch pointer that points to the newly created branch. In the preferred embodiment, where the tree is implemented in a 32-bit system, the newly created branch is a level 12 branch of size 64 slots since, as discussed previously, immediate indexes cannot be stored above level 12 in the tree. If the root pointer contains a branch pointer, or once it has been created in steps 706 and 708, the next branch is accessed 710 (as determined by the contents of the branch pointer) to obtain 712 the next slot (as determined from the level of the tree, width of the branch, and index). The contents of the next slot are examined 714 to determine whether the slot contains a null pointer, a branch pointer, a leaf pointer, or an immediate index. If the slot contains a null pointer, a determination identifier made 716 as to whether the current branch is a narrow branch or a wide branch. If the current branch is a narrow branch, the immediate index corresponding to the index at the current level in the tree is inserted 718 into the slot, a flower associated with the narrow branch is created if one does not already exist, and a pointer to its associated target value slot of the narrow branch's associated flower is returned 724. If the current branch is a wide branch, a new narrow branch and associated flower is created 720, and the current slot is updated to contain a branch pointer pointing to the newly created narrow branch. The immediate index corresponding to the index at the level of the newly created narrow branch is then inserted 722 in the in-position slot corresponding to the immediate index in the newly created narrow branch, and a pointer to the target value in the associated flower that corresponds to the immediate index slot is returned 724.

If the slot from step 714 contains a branch pointer, the next level of the tree is traversed by repeating steps 710, 712, and 714. If the slot in step 714 contains a leaf pointer, the bit in the leaf validity indicator corresponding to the leaf which maps to the index is set 726, and a pointer to the leaf is returned 728. If the slot in step 714 contains an immediate index, a comparison of the immediate index with the immediate index corresponding to the index at that level in the tree is made 730. If a match is found, a pointer to the immediate index is returned 732. If a match is not found, the rest of the flower is searched 734 for a match 736. If a match is found elsewhere in the flower, a pointer to the target value in the associated slot is returned 732. Otherwise, collision resolution is performed 738, and a pointer to the target value of the resolved location of the index in the tree is returned 740.

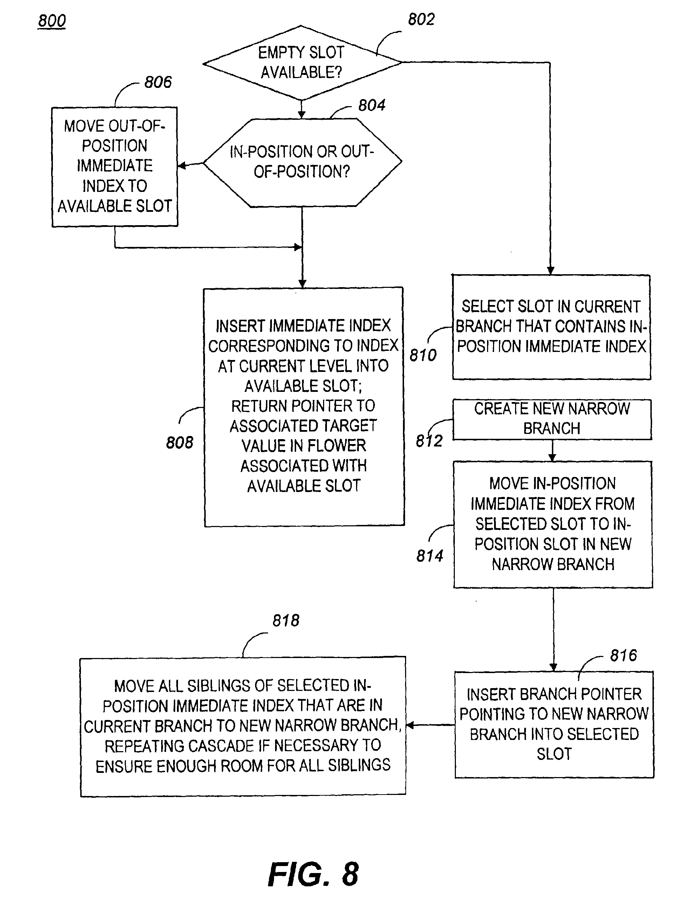

FIG. 8 is a flowchart of one method 800 for performing collision resolution. This embodiment supports both in-position and out-of-position immediate indexes, giving preference to positioning immediate indexes in their in-position slots when possible. As shown, method 800 begins by determining 802 whether the current branch contains any available slots, indicated by a null pointer. If at least one available slot exists in the current branch, the immediate index in the current slot is checked 804 to see if it is in-position or out-of-position. If the immediate index is out-of-position, it is moved 806 to one the available slots in the current branch (and its associated target value is moved to the available slot's corresponding slot in the branch's associated flower). If the immediate index is in-position as determined in step 804, or after step 806 has been completed, the immediate index of the new index for the current level is calculated and inserted 808 into the current slot. The return pointer is set to the address of the corresponding slot of the flower associated with the current branch.

If in step 802 the current branch contains no available slots, at least one in-position immediate index in the current branch is cascaded to a lower level. In the illustrative embodiment, this is achieve by selecting 810 at least one slot of the current branch that contains an in-position immediate index to be cascaded. For each in-position immediate index selected to be cascaded, a new narrow branch is created 812. The in-position immediate index is updated to reflect its corresponding immediate index for the next-lower level (by shifting left one digit and padding the right-most digit with a zero) and moved 814 to its corresponding in-position slot in the new narrow branch (and its associated target value is moved to its corresponding position in the new narrow branch's associated flower). The selected immediate index in the current branch is replaced 816 with a branch pointer pointing to the selected immediate indexes corresponding new narrow branch with a size indicating that the new narrow branch is narrow. All siblings contained in the current branch that are siblings of the selected immediate index are then moved 818 into the new narrow branch, preferably in-position if possible. Step 804 is then repeated.

The details of in-position immediate index selection for a cascade condition may vary from implementation to implementation as long as at least one in-position immediate index in a branch is cascaded when necessary. In addition, the allowance of out-of-position immediate indexes is an optional feature, and the selection criteria used to select which slot among a plurality of available slots in which to insert an out-of-position immediate index may also vary from implementation to implementation.

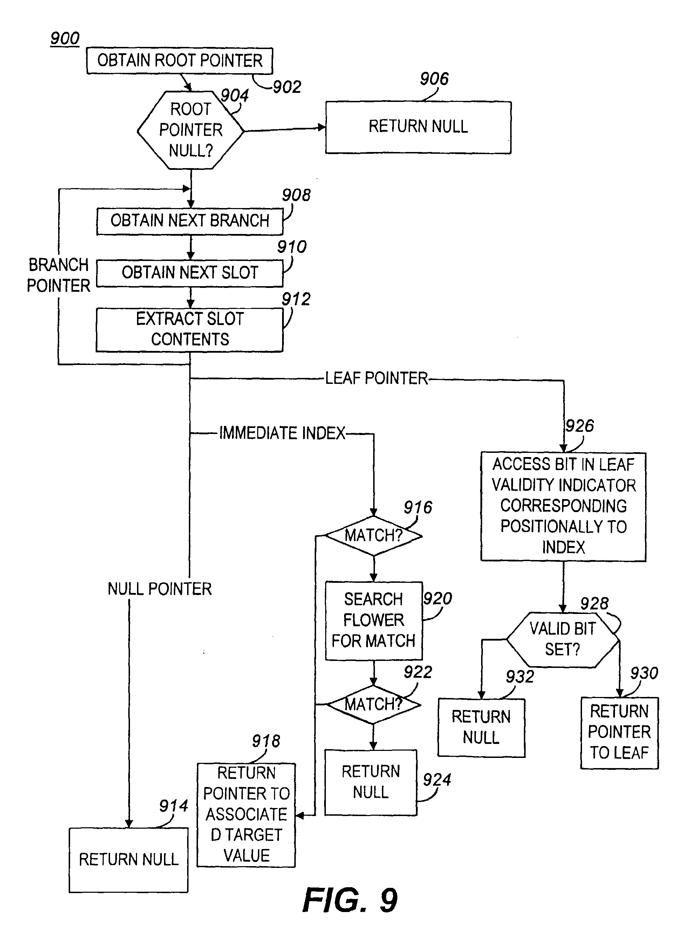

Operation tree_get(), given a root pointer and an index, returns a pointer to the target value for the specified index. A null pointer is returned if the index is invalid. During a lookup, tree_get() traverses the tree looking for the specified index, but makes no changes to the tree. FIG. 9 illustrates a method 900 implemented for one embodiment of tree_get(). In this embodiment, the contents of the root pointer are examined 902 to determine 904 whether the root pointer is null. If the root pointer contains a null pointer, a null value is returned 906 to indicate that the tree does not contain a valid target value associated with the index. If instead the root pointer contains a branch pointer, the next branch and slot are accessed 908 and 910 to extract 912 the contents of the slot.

If the slot contains a null pointer, a null value is returned 914 to indicate that the tree does not contain a valid target value associated with the index. If the slot contains an immediate index, the immediate index is examined to determine 916 whether the immediate index, when expanded to include the "missing" digits inherent in its position in the tree, corresponds to the index under search. If it does correspond, a pointer to the target value associated with the immediate index is returned 918; otherwise, the contents of the other slots in the same branch are examined 920 to determine whether or not the branch contains an immediate index corresponding to the index under search. If a match is found 922, a pointer to the target value associated with the matching immediate index corresponding to the index under search is returned 918. If not, a null value is returned 924 to indicate that the tree does not contain a valid target value associated with the index.

If instead the slot accessed in step 912 contains a leaf pointer, the leaf validity indicator is accessed 926 to determine 928 whether the contents of the leaf associated with the index is valid or not. If so, the pointer to the leaf is returned 930; otherwise a null value is returned 932 to indicate that the tree does not contain a valid target value associated with the index. Finally, if the slot instead contains a branch pointer, steps 908 through 932 are repeated until either a null pointer is encountered, or a valid or invalid leaf is encountered.

Appendix A contains an example C program code of a preferred implementation of operation tree_get(). This routine requires two parameters, Proot_t and Index, which respectively correspond to the root pointer to the tree to search and the requested Index to lookup, to be passed to it. Tree_get() employs the following variables: Slot, which indicates the current Slot into the current branch; Digit, which is the Index into the current branch pointing to the current Slot; SftIdx, which contains only the portion of the Index that remains to be decoded at any particular level; level, which is the current Level of the tree; and Pbr, which is a pointer to the next branch.

Tree_get begins by first determining whether pointer Proot is defined. If it is not, the tree does not exist. Next, the level of the tree level is initialized to sixteen levels. SftIdx is initialized with the full Index. As the tree is descended SftIdx is shifted off to the left so that the value of SftIdx contains only the portion of the Index that remains to be decoded at any particular level. Slot is initialized to the root pointer which is pointed to by pointer Proot, and SlotType is initialized to equal the value of the least four bits of the Slot (or head pointer of the tree). Digit is initialized to the size of the next Branch by pointing to the two most significant bits (or single quaternary digit) of Index, and shifting it two bits (or one quaternary digit) per value of the SlotType. In other words, if SlotType is "0001", SftIdx is shifted to obtain the two highest bits of Index, and Digit is set to the value of the two highest bits; if SlotType is "0002", SftIdx is shifted to obtain the four highest bits of Index, and Digit is set to the value of the four highest bits; and so on. Accordingly, Digit is the Index into the next Branch, and SftIdx contains the remaining bits that are still left to be parsed.

For each level of the tree, or until an immediate index is encountered, the following operation is repeated: Extract the pointer to the next branch Pbr via an XOR operation with Slot and Slot_Id. Index Digit positions into next Branch pointed to by Pbr to extract the next Slot. Decrement the current tree Level by the number of levels descended by pointer Pbr, as defined by SlotType. Thus, if SlotType is 1, decrement by 1; if SlotType is 2, decrement by 2; and so forth. Extract SlotType from Slot, and check to see if SlotType is 0 (i.e., is it an immediate index?). If it is, compare the bits of Index which still remain to parsed, as represented by the current value of SftIdx, with all four Slots of the current Branch pointed to by pointer Pbr. If a match is found, return a pointer to the matching Slot's associated target value. If no match is found, return a NULL, which indicates that no target value is mapped to Index.

If SlotType is not 0, then determine whether the current level of the tree is Level = 1. If the current Level is one, Slot must be a Leaf pointer. To be a Leaf pointer with valid target values, at least one bit of the lowest four bits (i.e., the SlotType) must be set. The least four bits map out which Leafs are valid (i.e., mapped) and which ones are not. Shift Index SftIdx left two bits to extract the last Digit. Compare SlotType with the extracted Digit ("0" - "3") to see if its corresponding bit is set. If its corresponding bit is set, extract the leaf pointed to by the leaf pointer from the current branch Pbr and return the pointer Pbr which points to the target value contained in the leaf. If not valid, return a NULL to indicate that the Index has not been mapped.

If instead the SlotType is neither an immediate index or Null pointer, and the current Level is not level 1, shift SftIdx by the appropriate number of bits as determined by the SlotType, extract out the appropriate number of bits from the remaining bits in SftIdx into Digit, and then repeat.

Operation tree_del() removes a valid index and associated target value from the tree. It operates similarly to the lookup operation, except that once the valid index is found, it is removed from the tree either by overwriting the immediate index with a null pointer or by setting the leaf validity indicator of a leaf pointer to indicate that the target value is invalid. For those branches containing all null pointers, the entire branch can be deallocated and its parent slot set to a null pointer in order to free up memory. This is a recursive operation, and essentially operates as a reverse cascade.

Neighbor operations allow neighbor indexes to be located rapidly (backwards or forwards) using functions tree_first(), tree_last(), tree_prev(), and tree_next(). Tree_first() searches for the first chronological mapped index in the tree and returns a pointer to its target value. Tree_last() searches for the last chronological mapped index in the tree and returns a pointer to its target value. Tree_prev(), given an index, searches for the first available chronological mapped index previous to the given index in the tree, if one exists, and returns a pointer to its target value. If a mapped index previous to the given index does not exist, a null pointer is returned. Tree_next(), given an index, searches for the next available chronological mapped index after the given index in the tree, if one exists, and returns a pointer to its target value. If a next mapped index does not exist, a null pointer is returned.

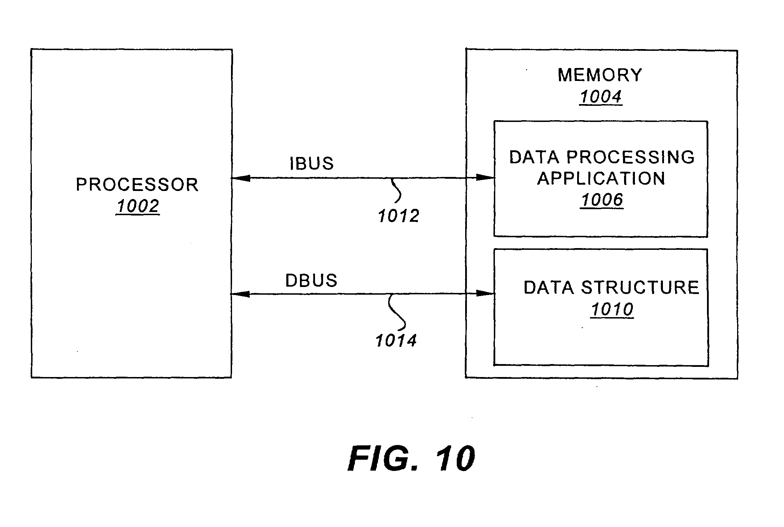

FIG. 10 is a block diagram of data processing system which uses the data structure of the invention. Data processing system 1000 includes a processor 1002 and a memory 1004. A data processing application 1006 and a data structure 1010 implemented in accordance with the invention resides in memory 1004. Processor 1002 retrieves and executes instructions from data processing application 1006 via instruction bus 1012. Data processing application 1006 includes one or more operations including tree_insert(), tree_get(), tree_del(), tree_first(), tree_last(), tree_previous(), tree_next() and/or any other data structure manipulation and/or query operations. Data is stored in or accessed from data structure 1010 via data bus 1014.

A novel adaptive hybrid tree data structure has been described in detail above. Those skilled in the art will appreciate that the invention offers many advantages over prior art data structures. The data structure's novel combination of positional and local (or immediatized) indexes results in both optimized data access times and memory efficiency. The optimization is achieved via two unique mechanisms. The first mechanism, collapsing, optimizes the hybrid tree data structure by eliminating any unnecessary levels of the tree. The second mechanism, namely the use of immediate indexing, optimizes the hybrid tree data structure by essentially pruning the branches of the tree to store each index at the highest level of the tree possible. Both optimization techniques result in improved data access times and reduction of memory overhead. Searching for mapped indexes is faster because unmapped indexes are skipped at as high a level as possible in the tree. When an expanse represented by a pointer is not heavily populated with stored values, it is compacted into a higher level of the tree by using immediate indexes, which include a portion of the index information that would otherwise be purely positional.

While illustrative and presently preferred embodiments of the invention have been described in detail herein, it is to be understood that the inventive concepts may be otherwise variously embodied and employed and that the appended claims are intended to be construed to include such variations except insofar as limited by the prior art.

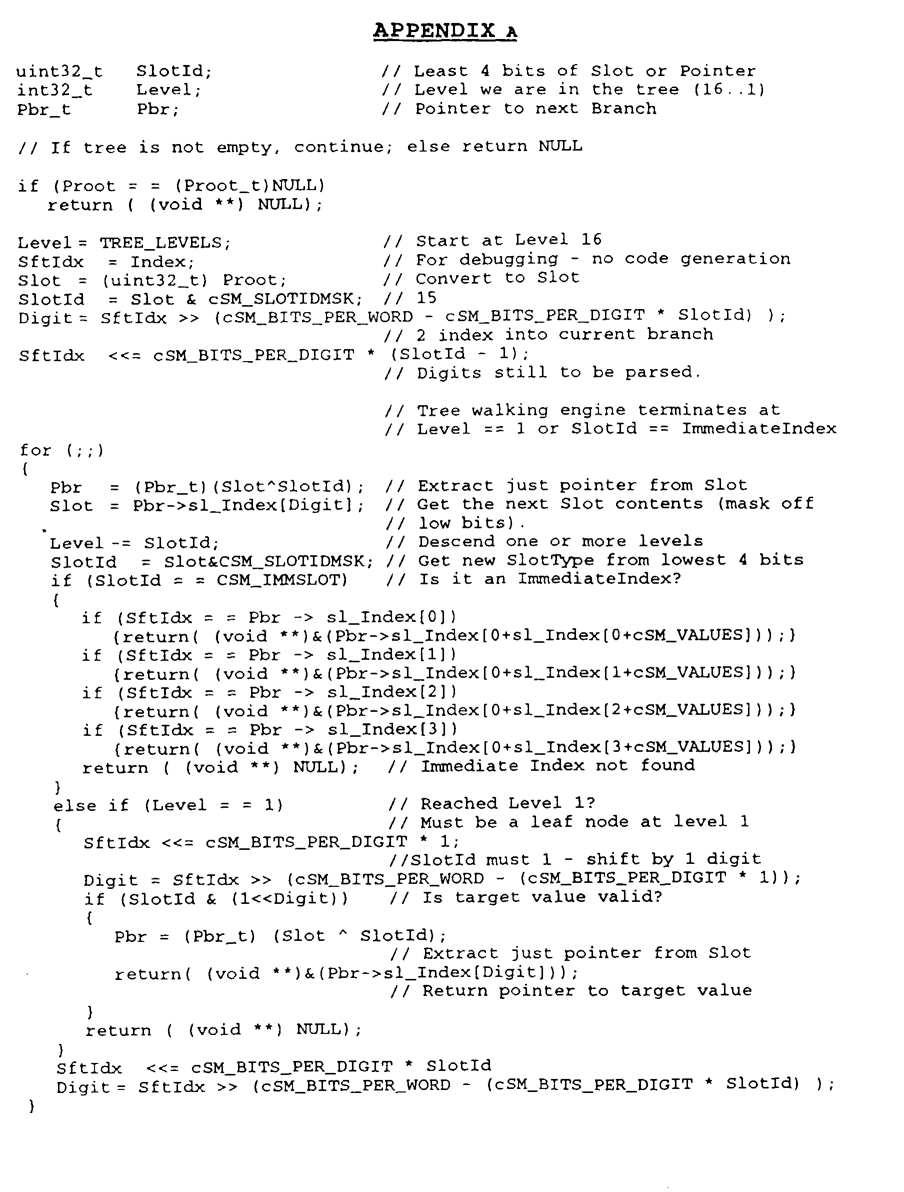

## Claims

1. A data processing system for a computer, comprising:
a memory (1004) for storing data;
an application program (1006) being executed on a data processing system (1002);
a data structure (1010) stored in said memory (1004), said data structure (1010) including information resident in a database used by said application program (1006) and including:
a root pointer( 112, 316, 366, 416), said root pointer comprising a pointer and a size indicator (N);
a branch (104) pointed to by said pointer, and comprising a plurality of slots (114) (114) equal in number to said size indicated by said size indicator (N), each of said plurality of slots (114) comprising one of:
a null pointer (126) indicating that said slot is empty;
a branch pointer (122) pointing to a lower level branch (104) comprising a plurality of slots (114) and indicating the number (N) of slots (114) contained in said lower level branch; or
a leaf pointer (323, 361) pointing to a leaf (320, 370) that comprises a target value (330, 380) mapped to an index defined by the position of said leaf (320, 370) in said data structure (1010).

2. A data processing system in accordance with claim 1, comprising:
a plurality of branches (104) each of which is pointed to by a branch pointer (122) in a slot (114) of a higher level branch (104) and comprising a plurality of slots (114), each of said plurality of slots (114) comprising one of either a null pointer (126), a branch pointer (122), or a leaf pointer (323, 361).

3. A data processing system in accordance with claim 1 or 2, wherein:
said leaf pointer (323, 361) comprises a leaf validity indicator (324, 362) indicating whether or not said target value (330, 380) mapped to said index defined by the position of said leaf (320, 370) pointed to by said leaf pointer (323, 361) is valid.

4. A data processing system in accordance with claim 1, 2, or 3, wherein:
each said plurality of slots (114) may further comprise:
an immediate index (124) indicating an index defined in part by the position of said immediate index (124) in said data structure (1010) and by an associated target value (134) mapped to said immediate index (124).

5. A method for storing a target value mapped to an index in a data structure (1010) stored in a memory (1004), said index comprising a plurality of digits, and said data structure (1010) comprising at least one branch (104) which comprises a plurality of slots (114) each of which comprises one of a null pointer (126) indicating that said slot (114) is empty, a branch pointer (122) pointing to a lower level branch (104) comprising a plurality of slots (114) and indicating the number (N) of slots (114) contained in said lower level branch, or a leaf pointer (323, 361) pointing to a leaf (320, 370) that comprises a target value (330, 380) mapped to an index defined by the position of said leaf (320, 370) in said data structure (1010), and said data structure (1010) being pointed to by a root pointer (112, 316, 366, 416), said root pointer pointing to one of said at least one branch (104) and indicating the number (N) of slots (114) in said pointed-to branch, said method comprising:
obtaining (710) a current branch (104) from said root pointer (112, 316, 366, 416), said current branch (104) comprising said at least one branch (104) pointed to by said root pointer (112, 316, 366, 416);
parsing a digit set from remaining unparsed ones of said plurality of digits from said index;
accessing (712, 714) a slot (114) in said current branch (104) indexed by the value of said parsed digit set;
if said slot contains a leaf pointer (323, 361), inserting (726, 728) said target value (330, 380) in a leaf (320, 370) indexed by said current digit set in a leaf branch pointed to by said leaf pointer (323, 361);
if said accessed slot (114) contains a null pointer (126) and said index comprises no remaining unparsed digits, creating a leaf branch comprising a predetermined number of leafs, inserting said target value (330, 380) in said leaf (320, 370) indexed by said current digit set, and replacing said null pointer (126) with a leaf pointer (323, 361) pointing to said leaf branch;
if said accessed slot (114) contains a null pointer (126) and said index comprises remaining unparsed digits, creating a new branch comprising a predetermined number (N) of slots (114), replacing said null pointer (126) with a branch pointer (122) which points to said new branch and indicates that the size of said new branch is equal to said predetermined number of slots (114), setting said current branch (104) to said new branch, and repeating said method beginning at said parsing step; and
if said accessed slot (114) contains a branch pointer (122), setting (710) said current branch (104) to said branch pointed to by said branch pointer (122), and repeating said method beginning at said parsing step.

6. The method of claim 5, wherein each of said plurality of slots (114) may further comprise an immediate index (124) corresponding to an index, said corresponding index derived partially from the position of said immediate index (124) in said data structure (1010) and partially from the value of an associated target value (134, 330, 380) mapped to said index defined by the position of said leaf (320, 370) in said data structure (1010), said method comprising:
if said accessed slot (114) contains a null pointer (126), instead replacing (718, 720, 722) said null pointer (126) with an immediate index (124) and storing said target value (134, 330, 380) in a memory location associated with said immediate index (124), wherein said target value (134, 330, 380) and said position of said immediate index (124) in said data structure (1010) together indicate the value of said index.

7. The method of claim 5 or 6, comprising:
if said accessed slot (114) contains an immediate index (124) and said index comprises no remaining unparsed digits, creating a leaf branch comprising a predetermined number of leafs, inserting said target value (330, 380) in said leaf (320, 370) indexed by said current digit set, moving said target value (330, 380) associated with said immediate index (124) into said leaf (320, 370) in said leaf branch indexed by said immediate index (124), and replacing said immediate index (124) with a leaf pointer (323, 361) pointing to said leaf branch; and
if said accessed slot (114) contains an immediate index (124) and said index comprises remaining unparsed digits, creating a new branch comprising a predetermined number of slots (114), updating said immediate index (124) to reflect a change in position in the data tree to said new branch; storing said updated immediate index (124) in a slot in said new branch indexed by said updated immediate index (124) and said target value (330, 380) associated with said immediate index (124) into a memory location associated with said slot in said new branch, replacing said immediate index (124) with a branch pointer (122) which points to said new branch and indicates that the size of said new branch is equal to said predetermined number of slots (114), setting said current branch (104) to said new branch, and repeating said method beginning at said accessing step.

8. The method of claim 5, 6, or 7, comprising:
if said accessed slot (114) contains an immediate index (124) and said index comprises no remaining unparsed digits and no slot in said current branch (104) contains a null pointer (126), creating a leaf branch comprising a predetermined number of leafs, inserting said target value (330, 380) in said leaf (320, 370) indexed by said current digit set, moving said target value (330, 380) associated with said immediate index (124) into said leaf (320, 370) in said leaf branch indexed by said immediate index (124), and replacing said immediate index (124) with a leaf pointer (323, 361) pointing to said leaf branch; and
if said accessed slot (114) contains an immediate index (124) and said index comprises no remaining unparsed digits and at least one slot in said current branch (104) contains a null pointer (126), replacing said null pointer (126) in one of said at least one slots (114) with an immediate index (124) which along with the position of said immediate index (124) in said data structure (1010) indicates the value of said index, and storing said target value (330, 380) in a memory location associated with said immediate index (124); and
if said accessed slot (114) contains an immediate index (124) and said index comprises remaining unparsed digits, creating a new branch comprising a predetermined number of slots (114), updating said immediate index (124) to reflect a change in position in the data tree to said new branch; storing said updated immediate index (124) in a slot in said new branch indexed by said updated immediate index (124) and said target value (330, 380) associated with said immediate index (124) into a memory location associated with said slot in said new branch, replacing said immediate index (124) with a branch pointer (122) which points to said new branch and indicates that the size of said new branch is equal to said predetermined number of slots (114), setting said current branch (104) to said new branch, and repeating said method beginning at said accessing step.

9. The method of claim 5, 6, 7 or 8, comprising:
accessing a target value (134, 330, 380) mapped to an index in said data structure (1010) by:
obtaining a current branch (104) pointed to by said root pointer;
parsing a digit set from remaining unparsed ones of said plurality of digits from said index;
accessing a slot (114) in said current branch (104) indexed by the value of said parsed digit set;
if said accessed slot (114) contains a leaf pointer (323, 361), accessing said target value (330, 380) in a leaf (320, 370) indexed by said current digit set in a leaf branch pointed to by said leaf pointer (323, 361);
if said accessed slot (114) contains a null pointer (126), indicating that said index does not have an existing target value (330, 380); and
if said accessed slot (114) contains a branch pointer (122), setting said current branch (104) to said branch pointed to by said branch pointer (122), and repeating said method beginning at said parsing step.

10. The method of claim 9, comprising:
if said accessed slot (114) contains an immediate index (124) that together with the position of said immediate index (124) in said data structure (1010) correspond to said index, accessing said target value (134, 330, 380) associated with said immediate index (124) in said current branch (104);
if said accessed slot (114) contains an immediate index (124) that together with the position of said immediate index (124) in said data structure (1010) does not correspond to said index, indicating that said index does not have an existing target value (134, 330, 380).
